# DEMANDE DE BREVET EUROPEEN

(11) **EP 1 738 931 A1**
(43) Date de publication de la demande: **03.01.2007**
(21) Numéro de dépôt: 06116205.3
(22) Date de dépôt: 28.06.2006
(51) Int. Cl.: B60C 17/06

(54) **Ensemble de roulage à plat allégé comportant un appui structurel à effet pression**

(30) Priorité: 30.06.2005 FR 0506750
(71) Demandeur: Société de Technologie Michelin, 63000 Clermont-Ferrand (FR); MICHELIN Recherche et Technique S.A., 1763 Granges-Paccot (CH)
(72) Inventeur: Tramond, Philippe, 63230 Saint Ours les Roches (FR); Lacour, Jean-Charles, 63000 Clermont-Ferrand (FR)
(74) Mandataire: Lasson, Cédric Y. M.

(57) **Abrégé**

Ensemble de sécurité (1) permettant le roulage à pression réduite, comprenant une jante (2), ladite jante étant dotée d'une valve, un pneumatique (4) monté sur la jante, et un appui structurel (3) reposant sur la jante (2) et enfermé dans l'espace compris entre la jante et la paroi intérieure du pneumatique, caractérisé en ce que les deux extrémités axialement opposés (31, 32) de la semelle (30) de l'appui (3) forment une liaison étanche avec la partie de la jante (2) sur laquelle elles reposent, et en ce que l'espace compris entre la jante (20) et la semelle de l'appui (30) et situé entre les deux liaisons étanches, est en communication avec la pression atmosphérique par l'intermédiaire d'un conduit (26)

## Description

L'invention concerne les ensembles de sécurité permettant le roulage à pression réduite, et comportant une jante, ladite jante étant dotée d'une valve, un pneumatique monté sur la jante, et un appui structurel reposant sur la jante et enfermé dans l'espace compris entre la jante et la paroi intérieure du pneumatique.

Ces ensembles et les éléments originaux qui les composent sont connus de l'art antérieur et sont décrits dans les publications EP 0 748 287, EP 0 736 747 ou encore EP 1206357.

Ces publications divulguent des ensembles de sécurité permettant le roulage à pression réduite. Au-delà de la recherche du meilleur compromis permettant d'assurer les fonctions de sécurité recherchées, ces publications divulguent également des formes particulières de réalisation de la jante et de l'appui dans le but de réduire la masse de réduire la masse totale de l'ensemble.

Les jantes utilisées dans les ensembles décrits ci-dessus peuvent être indifféremment du type à siège incliné vers l'intérieur ou vers l'extérieur.

On entend par appui structurel un appui sur lequel la partie interne du sommet du pneumatique vient s'affaisser lors de la perte de pression dans l'enveloppe. Ces appuis sont fabriqués à partir d'un matériau ayant des rigidités élastiques élevées de manière à présenter une résistance suffisante pour permettre à l'appui de porter la charge, mais également de rendre l'appui suffisamment souple pour s'accommoder des chocs. Typiquement ces appuis sont réalisés à base de caoutchouc, de polyuréthanes ou encore de thermoplastiques élastomériques.

Les appuis sont soumis à l'action de la force centrifuge lors du roulage à grande vitesse du véhicule, et comportent généralement des nappes de renfort circonférentielles situées dans la semelle des dits appuis, et destinées à maintenir l'appui en contact avec la jante quelles que soient les conditions de roulage du véhicule. Une autre possibilité consiste à créer des surépaisseurs de matériau élastomérique pour obtenir un serrage convenable de l'appui sur la jante.

L'utilisation de nappes de renfort constitue un facteur contribuant à augmenter la masse de l'appui, et leur réalisation et leur assemblage est générateur de surcoûts.

L'invention a pour objet de s'affranchir de la nécessité de renforcer l'appui structurel pour assurer sa tenue sur la jante quelles que soient les vitesses de roulage du véhicule.

A cet effet il est proposé de former une liaison étanche entre les deux extrémités axialement opposées de la semelle de l'appui et la jante sur laquelle elle repose. L'espace compris entre la jante et la semelle est mis en communication avec la pression atmosphérique par l'intermédiaire d'un conduit.

Lors de la mise sous pression de l'ensemble le volume délimité par la paroi intérieure du pneumatique, la jante et la surface de l'appui, est porté à la pression d'utilisation de l'ensemble, à l'exception du volume compris entre la semelle et la jante, et situé entre les deux liaisons étanches, qui demeure à la pression atmosphérique.

De la différence de pression entre les deux volumes, il résulte une force dirigée radialement vers l'intérieur agissant sur l'appui et ayant pour effet de plaquer ledit appui sur la jante. Cette force s'oppose à la force centrifuge et participe au maintien de l'appui en position contre la jante lorsque le véhicule atteint une vitesse élevée.

Il est ainsi possible d'alléger la fabrication de l'appui en supprimant tout ou partie des renforts circonférentiels ayant pour fonction de fretter l'appui sur la jante.

La description qui suit permet de mieux comprendre l'objet de l'invention au travers de deux modes particulier et non limitatifs de réalisation, en s'appuyant sur les figures 1 à 3 dans lesquelles :
- la figure 1 représente une vue en coupe radiale d'un ensemble conforme à l'invention selon un premier mode de réalisation de la liaison étanche,
- la figure 2 représente une vue en coupe radiale d'un ensemble conforme à l'invention selon un second mode de réalisation de la liaison étanche,
- la figure 3 représente une vue en coupe radiale d'un ensemble conforme à l'invention selon un troisième mode de réalisation de la liaison étanche.

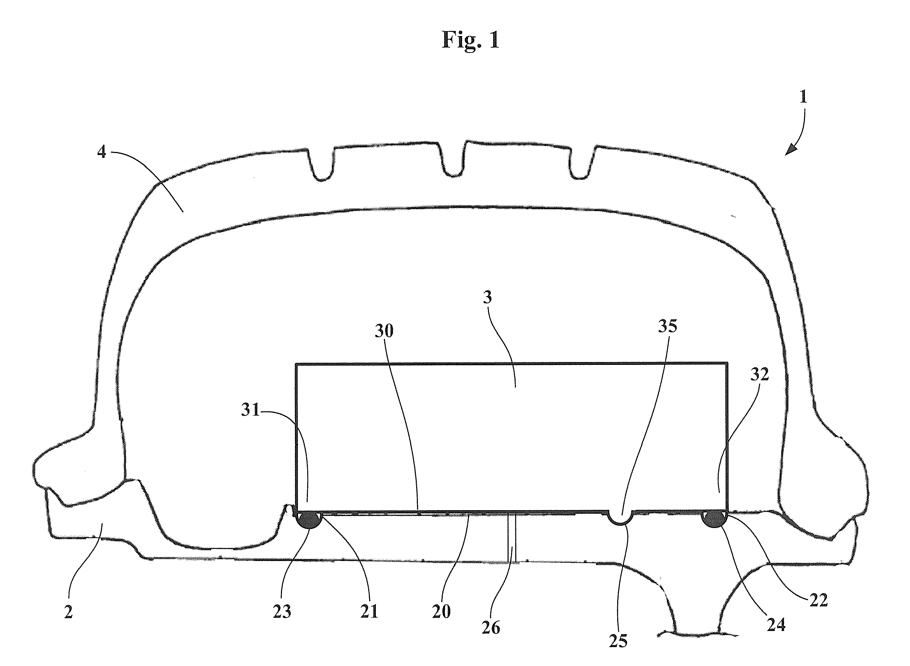

La figure 1 représente un ensemble 1 comprenant une jante 2 dotée d'une valve de gonflage (non représentée). Un pneumatique 4 est monté sur ladite jante 2 et un appui structurel 3 est monté sur la jante dans l'espace intérieur délimité par la surface interne du pneumatique et la jante.

Les deux extrémités axiales opposées 31 et 32 de l'appui forment une liaison étanche avec la jante. A cet effet, deux gorges circonférentielles 21 et 22 sont disposées sur la jante au droit des extrémités 31 et 32 de l'appui. Des joints toriques 23 et 24 sont placés dans le creux des gorges 21 et 22 et viennent former une liaison étanche avec la semelle 30 de l'appui 3. Un conduit 26 permet de relier l'espace compris entre la jante 20 et la semelle 30 et situé axialement entre les deux liaisons étanches à l'atmosphère.

Pour éviter les mouvements de l'appui dans la direction axiale il est recommandé de réaliser sur la jante 3 une gorge circonférentielle supplémentaire 25 que l'on disposera entre les liaisons étanches réalisées aux deux extrémités axiales 31 et 32 de la semelle de l'appui. L'appui portera un cordon circonférentiel 35, continu ou discontinu, solidaire de la semelle, et destiné à s'insérer de manière amovible dans la gorge 25.

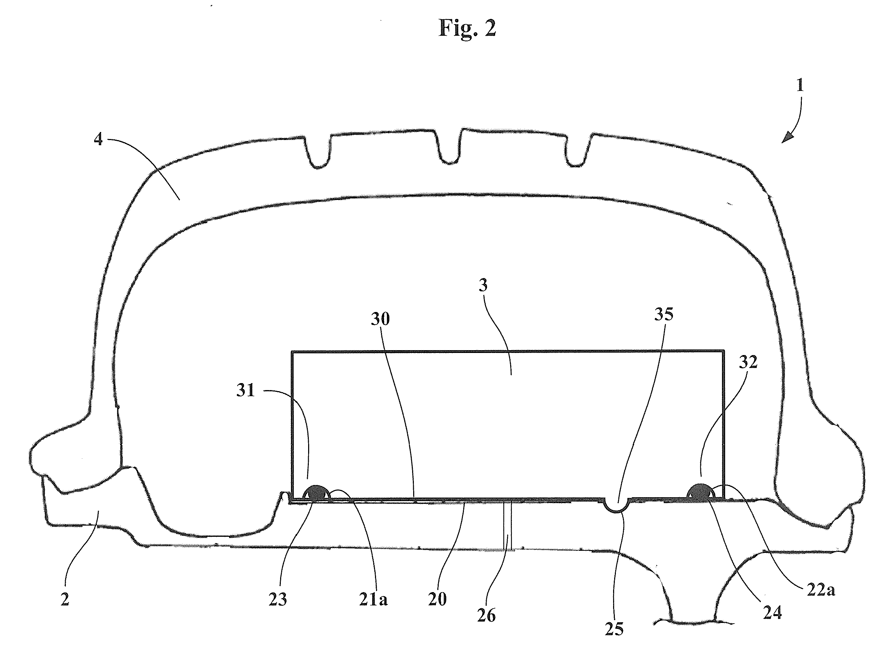

Une première alternative de réalisation est illustrée à la figure 2, dans laquelle les gorges circonférentielles 21a et 22a sont pratiquées directement dans l'appui 3. les joints toriques 23 et 24 sont placés dans le creux des dites gorges 21a et 22a et s'appuient sur la face interne 20 de la jante 2 avec laquelle ils forment une liaison étanche.

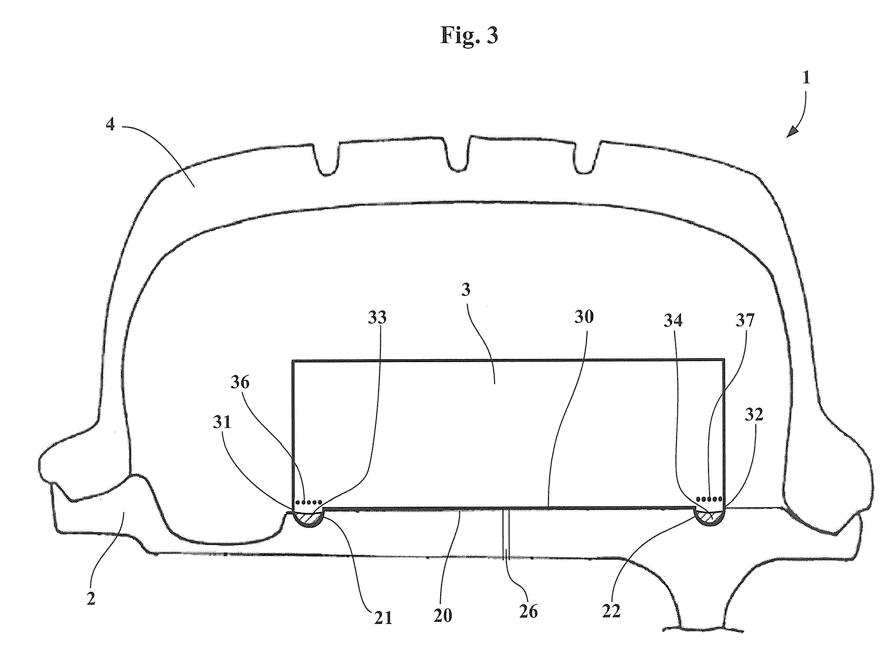

Une autre forme de réalisation de la liaison étanche est illustrée par la figure 3, et dans laquelle la jante comporte deux gorges circonférentielles 21 et 22 situées au droit des extrémités axialement opposées 31 et 32 de la semelle 30 de l'appui 3. L'appui 3 comporte deux cordons circonférentiels 33 et 34 situés à chacune des extrémités axialement opposées 31 et 32 de la semelle 30 de l'appui 3. Ces cordons 33 et 34 s'insèrent de manière amovible dans les gorges 21 et 22. L'étanchéité est assurée directement par le contact entre les cordons 33 et 34 et le creux des gorges 21 et 22. A cet effet, il est possible de réaliser les cordons 33 et 34 dans un matériau adapté à cette fonction qui peut éventuellement être différent du matériau constitutif de l'appui, sous réserve de disposer du procédé de fabrication apte à réaliser cette combinaison. Il est bien sûr également possible de placer des joints d'étanchéité 23 et 24 dans le creux des gorges 21 et 22 de telle manière que les joints soient mis en compression par les cordons 33 et 34.

Ce mode de réalisation permet à la fois d'assurer la liaison étanche et de prévenir tout mouvement axial de l'appui. Il est bien sûr possible de renforcer cette tenue latérale en disposant sur la surface interne de l'appui comprise entre les deux extrémités axiales opposées 31 et 32, des protubérances transversales (non représentées) non continues permettant une répartition des efforts de retenues sur la totalité de la surface interne.

Dans le cas où l'on désirerait éviter tout mouvement radial de l'appui au niveau des liaisons étanches, il est possible de rajouter des renforts circonférentiels (36, 37) dans la semelle au droit des extrémités de la semelle comme cela est représenté sur la figure 3. L'ajout de ces renforts permet d'augmenter le seuil de vitesse à partir duquel la liaison étanche est dégradée, entraînant en conséquence une perte de pression de l'ensemble de l'ensemble.

La forme et la profondeur des gorges ainsi que la forme et le diamètre des cordons est adaptée pour autoriser un montage et un démontage aisé de l'appui tout en préservant la qualité de la liaison étanche entre les extrémités axialement opposées de la semelle et la jante.

Les figures 1 à 3 sont réalisées sur la base de jantes dites à sièges incliné vers l'extérieur et dont les diamètres des sièges sont différents. Ce mode d'accrochage présente, en plus de son caractère spécifique permettant de reculer le seuil de déjantage du pneumatique, la propriété de permettre un montage et un démontage facilité de l'ensemble appui et roue. Toutefois, sans se départir de l'esprit de l'invention il est également possible de réaliser des ensembles conformes à l'invention sur des jantes à profil de siège orienté vers l'intérieur et prévue pour recevoir ce type d'appui, telle que, à titre d'exemple une jante en deux parties portant chacune un siège, et reliées axialement l'une à l'autre. Dans cette configuration, la liaison entre les deux demi jantes est disposée avantageusement entre les deux extrémités axiales opposées et la mise à l'air libre s'effectue alors naturellement au niveau de ladite liaison.

La réalisation d'un ensemble conforme à l'invention comportant un appui de 4kg, d'une largeur de 80 mm de large, ne comportant aucun renfort circonférentiel et monté sur une roue de diamètre 460mm supportant un pneumatique gonflé à une pression de 2,2 bars, permet de tenir l'appui sur la roue sans perte d'étanchéité jusqu'à une vitesse de 220 km/h.

La réalisation d'un appui allégé aux dimensions citées ci-dessus, et conforme à l'invention, permet de réduire le poids de l'appui de 200g, mais surtout de simplifier le processus de fabrication de ce dernier.

Il va sans dire qu'il est possible d'augmenter le seuil de la vitesse limite acceptable en augmentant la largeur de l'appui ou comme cela est également suggéré ci-dessus en disposant des renforts circonférentiels au droit des extrémités axialement opposées de la semelle de l'appui ce qui, sans se départir de l'esprit de l'invention en diminue une partie des avantages. Dans le cas de cette dernière disposition on tirera néanmoins profit de l'invention pour alléger le poids et par voie de conséquence le coût des renforts utilisés.

## Revendications

1. Ensemble de sécurité (1), comprenant une jante (2), ladite jante étant dotée d'une valve, un pneumatique (4) monté sur la jante, et un appui structurel (3) ayant une semelle (30) reposant sur la face interne (20) de la jante (2), ledit appui étant enfermé dans l'espace compris entre la jante et la paroi intérieure du pneumatique, ensemble permettant le roulage à pression réduite et **caractérisé en ce que** les deux extrémités axialement opposés (31, 32) de la semelle (30) de l'appui (3) forment chacune une liaison étanche avec la partie de la jante (2) sur laquelle elles reposent, et **en ce que** l'espace compris entre la jante (20) et la semelle de l'appui (30) et situé entre les deux liaisons étanches, est en communication avec la pression atmosphérique par l'intermédiaire d'un conduit (26).

2. Ensemble selon la revendication 1 dans lequel la jante (2) comporte deux gorges circonférentielles (21, 22) situées axialement au droit de chacune des extrémités axialement opposées (31, 32) de la semelle (30) de l'appui (3), gorges dans lesquelles sont disposés des joints toriques (23, 24) formant une liaison étanche entre la semelle (30) de l'appui (3) et la jante (2).

3. Ensemble selon la revendication 1 dans lequel l'appui (3) comporte deux gorges circonférentielles (21a, 22a) situées axialement au droit de chacune des extrémités opposées de la semelle de l'appui, gorges dans lesquelles sont disposés des joints toriques (23, 24) formant une liaison étanche entre l'appui (3) et la face interne (20) de la jante (2).

4. Ensemble selon l'une des revendications 1, 2 ou 3, dans lequel la jante comporte au moins une gorge circonférentielle supplémentaire (25) dans laquelle vient s'insérer de manière amovible un cordon circonférentiel (35) solidaire de la semelle (30) de l'appui (3), dans le but de bloquer les mouvements de l'appui dans la direction axiale.

5. Ensemble selon la revendication 1 dans lequel la jante (2) comporte deux gorges circonférentielles (21, 22) dans lesquelles viennent s'insérer de manière amovible deux cordons circonférentiels (33, 34) solidaires de la semelle (30) de l'appui (3), disposés au droit de chacune des extrémités axialement opposées (31, 32) de la semelle (30) de l'appui (3) et formant une liaison étanche avec ladite jante (3).

6. Ensemble selon la revendication 5 dans lequel la liaison étanche entre les cordons circonférentiel (33, 34) et la jante s'effectue par l'intermédiaire de joints (23, 24) disposés dans le creux des dites gorges (21, 22).

7. Ensemble selon la revendication 5 dans lequel la liaison étanche entre les cordons circonférentiel (33, 34) et la jante (3) s'effectue par l'intermédiaire du contact entre lesdits cordons circonférentiels et le creux des dites gorges (21, 22).

8. Ensemble selon la revendication 7 dans lequel les cordons circonférentiels (33, 34) sont réalisés dans un matériau différent de celui employé pour la réalisation de l'appui (3).

9. Ensemble selon l'une des revendications précédentes dans lequel les appuis (3) comportent des fils de renforts circonférentiels (36, 37) situés au droit des extrémités axialement opposées (31, 32) de la semelle (3).

10. Ensemble selon l'une des revendications précédentes dans lequel l'appui structurel (3) est plaqué contre la jante (2) sous l'effet de la pression de gonflage.
